(19) Europäisches Patentamt
European Patent Office
Office européen des brevets

(11) EP 1 129 049 B1

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(21) Anmeldenummer: **99950633.0**

(22) Anmeldetag: **05.10.1999**

(51) Int Cl.[7]: **C04B 41/63**

(86) Internationale Anmeldenummer:
**PCT/EP99/07439**

(87) Internationale Veröffentlichungsnummer:
**WO 00/020355 (13.04.2000 Gazette 2000/15)**

(54) **WÄSSRIGE, FILMBILDENDE ZUBEREITUNGEN AUF ACRYLAT-BASIS ZUR BESCHICHTUNG MINERALISCHER FORMKÖRPER**

AQUEOUS, FILM-FORMING PREPARATIONS FOR COATING MINERAL SHAPED BODIES

UTILISATION DE PREPARATIONS AQUEUSES FILMOGENES POUR APPLIQUER UN REVETEMENT SUR DES CORPS MOULES MINERAUX

(84) Benannte Vertragsstaaten:
**DE FR GB SE**

(30) Priorität: **06.10.1998 DE 19845999**

(43) Veröffentlichungstag der Anmeldung:
**05.09.2001 Patentblatt 2001/36**

(73) Patentinhaber: **BASF AKTIENGESELLSCHAFT**
**67056 Ludwigshafen (DE)**

(72) Erfinder:
- **SCHWARTZ, Manfred**
  **D-67227 Frankenthal (DE)**
- **BECHERT, Bertold**
  **D-67269 Grünstadt (DE)**
- **WIESE, Harm**
  **D-69115 Heidelberg (DE)**
- **HÜMMER, Wolfgang**
  **D-67134 Birkenheide (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 297 781** **WO-A-96/32429**
**DE-A- 3 918 981** **US-A- 3 219 610**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von wässrigen filmbildenden Zubereitungen, die wenigstens ein vernetztes Copolymer P in dispers verteilter Form enthalten, zur Beschichtung von mineralischen Formkörpern und ein Verfahren zur Beschichtung von mineralischen Formkörpern.

Unter mineralischen Formkörpern sind hier und im Folgenden Formkörper aus mineralischen Zuschlägen, wie Sand, Ton, zerkleinertem Gestein etc. und einem mineralischen Bindemittel sowie gegebenenfalls üblichen Zusätzen zu verstehen. Mineralische Bindemittel sind allgemein bekannt. Es handelt sich z. B. um feinteilige anorganische Stoffe, wie Kalk, Gips, Ton und/oder Zement, die im feuchten Zustand geformt werden können und sich beim Selbstüberlassen an der Luft oder auch unter Wasser, gegebenenfalls unter Einwirkung erhöhter Temperatur, nach einer gewissen Zeit steinartig verfestigen.

Die Zuschläge bestehen in der Regel aus körnigem oder faserförmigem natürlichem oder künstlichem Gestein (Kies, Sand, Mineralfasern), in Sonderfällen auch aus Metallen oder organischem Material oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Beispiele für erfindungsgemäß beschichtbare mineralische Formkörper sind z.B. Betonröhren, z. B. für Abwasser, Betondachsteine oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z. B. Polyester- oder Nylonfasern, gefüllt sein können.

Nachteilig an mineralischen Formkörpern ist, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Dabei treten oft auch "Ausblühungen" auf. Diese sind vermutlich darauf zurückzuführen, dass mehrwertige Kationen wie $Ca^{2+}$ durch Reaktion mit dem Kohlendioxid aus der Luft an der Oberfläche der mineralischen Formkörper unansehnliche weiße Kalkflecken bilden. "Ausblühungen" können auch bereits während des Erhärtens von frisch zubereiteten mineralischen Formkörpern auftreten.

Zur Vermeidung dieser Nachteile werden die mineralischen Formköri per häufig mit einer Schutzschicht versehen. Hierzu werden heute in der Regel wässrige Beschichtungssysteme eingesetzt, die als filmbildenden Bestandteil (Bindemittel) eine wässrige Polymerisatdispersion enthalten. Übliche Bindemittel umfassen Styrol/Acrylester-Copolymerisate, Vinylacetat-Homopolymerisate und Copolymerisate des Vinylacetats mit weiteren Monomeren, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators, die DE-A-195 14 266 die Verwendung von Polymerisaten, welche spezielle Monomere mit Sulfonatgruppen einpolymerisiert enthalten, und die DE 197 49 642.3 die Verwendung von Polymerisaten, welche Itaconsäure einpolymerisiert enthalten.

Aus der EP-A-279 067 sind Klarlacke für die Holzbeschichtung bekannt, die mit Divinylaromaten, Dioldi(meth)acrylaten oder Diallylphthalaten vernetzte Polymere auf Basis von Methacrylsäureacrylestern enthalten. Derartige Beschichtungen verlieren bei Bewitterung ihren Glanz und werden mit der Zeit spröde. Die DE-198 10 050.7 offenbart die Verwendung von wässrigen, filmbildenden Zubereitungen auf der Basis von Copolymeren mit Methacrylsäurealkylestern, die höchstens 1 Gew.-% Monomere mit 2 oder mehr ethylenisch ungesättigten Doppelbindungen aufweisen. Es werden keinerlei geeignete mehrfach ungesättigte Monomere genannt und die Beispiele sind frei von mehrfach ethylenisch ungesättigten Monomeren.

Die WO 96/32429 beschreibt Beschichtungsmittel auf Basis wässriger Polymerdispersionen, die Monomere mit Allylgruppen enthalten.

Aus der US-A-3,219,610 sind Latices auf Basis eines Terpolymers aus Alkylacrylat, Alkylmethacrylat und einem vernetzend wirkenden Ester der Methacrylsäure mit einem $\beta,\gamma$-ethylenisch ungesättigten Alkohol wie Allylmethacrylat oder Crotylmethacrylat bekannt.

Die EP-A-0 297 781 betrifft wässrige, filmbildende Polymerdispersionen, vorzugsweise auf Basis von Vinyl- oder Vinylidenchlorid, die Allyl- oder Allyloxygruppen enthaltende Monomere einpolymerisiert enthalten.

Der vorliegenden Erfindung liegt die Aufgabe zugrunde, Beschichtungen für mineralische Formkörper bereitzustellen, die verbesserte Glanzstabilität und Langzeithaltbarkeit im Außeneinsatz aufweisen, wirksam vor Ausblühungen schützen und gute Haftungseigenschaften auf mineralischen Substraten zeigen.

Es wurde nun überraschend gefunden, dass wässrige Zubereitungen mit Copolymeren P als filmbildenden Bestandteil, die im Wesentlichen aus (Meth)acrylsäureestern und/oder Vinylaromaten aufgebaut sind und 0,01 bis 1,9 Gew.-% spezieller vernetzend wirkender, zweifach ethylenisch ungesättigter (Meth)acrylsäureester enthalten, zu Beschichtungen mit erhöhter Glanzstabilität, hoher Langzeithaltbarkeit und guten Haftungseigenschaften bei der Außenanwendung führen.

Die vorliegende Erfindung betrifft somit die Verwendung von wässrigen filmbildenden Zubereitungen, die wenigstens ein aus ethylenisch ungesättigten Monomeren aufgebautes Copolymer P in dispers verteilter Form enthalten, das

a) 80 bis 99,89 Gew.-% mindestens eines Monomers, ausgewählt unter Estern der Acrylsäure mit $C_1$-$C_{12}$-Alkanolen, Estern der Methacrylsäure mit $C_1$-$C_8$-Alkanolen und Monovinylaromaten,

b) 0,1 bis 19,99 Gew.-% mindestens eines davon verschiedenen Monomers, ausgewählt unter α,β-ethylenisch ungesättigten $C_3$-$C_6$-Mono- und Dicarbonsäuren, den Amiden, N-Alkylamiden und Nitrilen dieser Carbonsäuren, Halbestern α,β-monoethylenisch ungesättigter $C_4$-$C_8$-Dicarbonsäuren mit $C_1$-$C_{12}$-Alkanolen, Vinylestern aliphatischer $C_1$-$C_{18}$-Carbonsäuren, α,β-monoethylenisch ungesättigten Sulfonsäuren und Sulfonsäureestern und α,β-monoethylenisch ungesättigten Siloxanen, und

c) 0,01 bis 1,9 Gew.-% mindestens eines vernetzend wirkenden Monomers, ausgewählt unter Estern der Acrylsäure oder Methacrylsäure mit linearen oder verzweigten $C_3$-$C_6$-Alkenolen, cyclischen $C_5$-$C_7$-Alkenolen und polycyclischen $C_7$- bis $C_{12}$-Alkenolen

einpolymerisiert enthält, wobei der Gesamtgehalt an freie Säuregruppen tragenden Monomeren, bezogen auf die Gesamtmenge aller einpolymerisierten Monomeren, kleiner als 5 Gew.-% ist, zur Beschichtung mineralischer Formkörper.

Beispiele für geeignete Ester der Acrylsäure mit $C_1$-$C_{12}$-Alkanolen sind z. B. Methyl-, Ethyl-, n-Propyl-, Isopropyl-, n-Butyl-, 2-Butyl-, Isobutyl-, tert.-Butyl-, 1-Methylbutyl-, 2-Methylbutyl-, 3-Methylbutyl-, 1,1-Dimethylbutyl, 2,2-Dimethylbutyl-, n-Pentyl-, 1-Methylpentyl-, 2-Methylpentyl-, 2-Ethylpentyl-, n-Hexyl-, 1-Methylhexyl-, 2-Methylhexyl-, 2-Ethylhexyl, n-Heptyl-, 1-Methylheptyl-, 2-Methylheptyl-, 2-Propylheptyl, n-Octyl-, 1-Methyloctyl-, 2-Methyloctyl-, n-Decyl- und n-Dodecylacrylat. Bevorzugt sind die Ester der Acrylsäure mit Alkanolen mit 2 bis 8 C-Atomen, d. h. Ethyl-, n-Propyl-, Isopropyl-, n-Butyl-, tert.-Butyl-, n-Pentyl-, n-Hexyl- und 2-Ethylhexylacrylat. Hierunter sind n-Butylacrylat und 2-Ethylhexylacrylat besonders bevorzugt.

Beispiele für geeignete Ester der Methacrylsäure mit $C_1$-$C_{18}$-Alkanolen z. B. Methyl-, Ethyl-, n-Propyl-, Isopropyl-, n-Butyl-, 2-Butyl-, Isobutyl-, tert.-Butyl-, 1-Methylbutyl-, 2-Methylbutyl-, 3-Methylbutyl-, 1,1-Dimethylbutyl, 2,2-Dimethylbutyl-, n-Pentyl-, 1-Methylpentyl-, 2-Methylpentyl-, 2-Ethylpentyl-, n-Hexyl-, 1-Methylhexyl-, 2-Methylhexyl-, 2-Ethylhexyl, n-Heptyl-, 1-Methylheptyl-, 2-Methylheptyl- und n-Octylmethacrylat. Bevorzugt sind die Ester der Methacrylsäure mit Alkanolen mit 1 bis 4 C-Atomen, d. h. Methyl-, Ethyl-, n-Propyl-, Isopropyl-, n-Butyl- und tert.-Butylmethacrylat. Hierunter sind Methylmethacrylat und n-Butylmethacrylat besonders bevorzugt.

Beispiele für geeignete vinylaromatische Monomere sind Styrol, α-Methylstyrol, o-Chlorstyrol und Vinyltoluole, bevorzugt ist Styrol.

Die Copolymere P enthalten, bezogen auf die Gesamtmonomermenge, vorzugsweise 90 bis 98,99 Gew.-% und besonders bevorzugt 95 bis 98,49 Gew.-% der vorgenannten Monomere (Monomere a)) einpolymerisiert.

Neben den vorgenannten Monomeren enthalten die Copolymere P, bezogen auf die Gesamtmonomermenge, 0,1 bis 19,99 Gew.-%, vorzugsweise 1,0 bis 9,9 Gew.-% und besonders bevorzugt 1,5 bis 4,99 Gew.-% mindestens eines davon verschiedenen Monomers (Monomer b)), ausgewählt unter α,β-ethylenisch ungesättigten $C_3$-$C_6$-Monocarbonsäuren, wie Acrylsäure, Methacrylsäure, Crotonsäure, Vinylessigsäure, Acrylamidoglykolsäure und Methacrylamidoglykolsäure, α,β-monoethylenisch ungesättigten $C_4$-$C_6$-Dicarbonsäuren, wie Maleinsäure, Fumarsäure, Itaconsäure und Citraconsäure, den Amiden der vorgenannten ungesättigten Mono- und Dicarbonsäuren, insbesondere Arcylamid und Methacrylamid, den n-Alkylamiden der vorgenannten ungesättigten Mono- und Dicarbonsäuren und den Nitrilen der vorgenannten ungesättigten Mono- und Dicarbonsäuren, wie Acrylnitril und Methacrylnitril, Vinylestern aliphatischer $C_1$-$C_{18}$-Carbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden), Halbestern α,β-monoethylenisch ungesättigter $C_4$-$C_8$-Dicarbonsäuren mit $C_1$-$C_{12}$-Alkanolen, wie Monomethylmaleinat und Mono-nbutylmaleinat, α,β-monoethylenisch ungesättigten Sulfonsäuren, wie Vinylsulfonsäure, 2-Acrylamido-2-methylpropansulfonsäure, 2-Acryloxyethansulfonsäure und 2-Methacryloxyethansulfonsäure, 3-Acryloxy- und 3-Metharcyloxypropansulfonsäure und Vinylbenzolsulfonsäure und deren Methyl-, Ethyl- und n-Butylester und α,β-monoethylenisch ungesättigten Siloxanen, wie Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan. Wenn die Copolymere P α,β-monoethylenisch ungesättigte Siloxane enthalten, werden sie in der Regel in Mengen von bis zu 1 Gew.-%, vorzugsweise 0,05 bis 0,5 Gew.-%, bezogen auf die Gesamtmonomerenmenge, verwendet. Bevorzugt als Monomere b) sind

Acrylsäure, Methacrylsäure, Itaconsäure, Maleinsäure, Fumarsäure, Acrylamid, Methacrylamid, Vinylacetat, Vinylsulfonsäure, 2-Acrylamid-2-methylpropansulfonsäure und Vinyltrimethoxysilan. Besonders bevorzugt sind Acrylsäure, Methacrylsäure, Maleinsäure, Acrylamid, Methacrylamid, Acrylnitril und Methacrylnitril.

Vorzugsweise enthalten die Copolymere P, bezogen auf die Gesamtmenge an Monomeren, weniger als 4 Gew.-%, besonders bevorzugt 0,1 bis 3,0 Gew.-% und ganz besonders bevorzugt 0,2 bis 2,0 Gew.-% freie säuregruppentragende Monomere und/oder Amide der $\alpha,\beta$-ethylenisch ungesättigten Carbonsäuren einpolymerisiert.

Darüber hinaus enthalten die Copolymere P 0,01 bis 1,9 Gew.-%, vorzugsweise 0,05 bis 1,5 Gew.-% mindestens eines vernetzend wirkenden Monomers, ausgewählt unter Estern der Acrylsäure oder Methacrylsäure mit linearen oder verzweigten $C_3$-$C_6$-Alkenolen, wie Acrylsäureallylester, Acrylsäuremethallylester, Acrylsäure-2-buten-1-ylester, Acrylsäure-3-buten-1-yl-ester, Acrylsäure-3-methyl-2-buten-1-yl-ester, Acrylsäure-3-methyl-3-buten-1-yl-ester, Acrylsäure-2-methyl-3-buten-2-yl-ester, Acrylsäure-5-hexen-1-ylester, Methacrylsäureallylester, Methacrylsäuremethallylester, Methacrylsäure-2-buten-1-yl-ester, Methacrylsäure-3-buten-1-ylester, Methacrylsäure-3-methyl-2-buten-1-yl-ester, Methacrylsäure-3-methyl-3-buten-1-yl-ester, Methacrylsäure-2-methyl-3-buten-2-yl-ester, Methacrylsäure-5-hexen-1-yl-ester, unter Estern der Acrylsäure oder Methacrylsäure mit cyclischen $C_5$-$C_7$-Alkenolen, wie Acrylsäurecyclohexenylester, Methacrylsäurecyclohexenylester, Acrylsäuremethylcyclohexenylester und Methacrylsäuremethylcyclohexenylester, und unter Estern der Acrylsäure oder Methacrylsäure mit polycyclischen $C_7$- bis $C_{12}$-Alkenolen, wie Acrylsäurenorbornenylester, Acrylsäuretricyclodecenylester, Methacrylsäurenorbornenylester und Methacrylsäuretricyclodecenylester. Bevorzugt sind Acrylsäureallylester, Acrylsäuremethallylester, Acrylsäuretricyclodecenylester, Methacrylsäureallylester, Methacrylsäuremethallylester und Methacrylsäuretricyclodecenylester, besonders bevorzugt sind Acrylsäureallylester und Methacrylsäureallylester und ganz besonders bevorzugt ist Methacrylsäureallylester.

Bevorzugt ist die Verwendung von Zubereitungen, enthaltend ein Copolymer P, worin die Monomere a) wenigstens einen Ester der Acrylsäure mit linearen und verzweigten $C_4$-$C_8$-Alkanolen und wenigstens ein weiteres Monomer, ausgewählt unter den Estern der Methacrylsäure mit $C_1$- und linearen $C_2$-$C_4$-Alkanolen und Vinylaromaten, enthalten.

Ganz besonders bevorzugt ist die Verwendung von Zubereitungen, enthaltend ein Copolymer P, worin sich die Monomere a) im wesentlichen aus n-Butylacrylat und wenigstens einem weiteres Monomer, ausgewählt unter Methylmethacrylat, n-Butylmethacrylat und Styrol, zusammensetzen.

Üblicherweise weist das Copolymer P eine Glasübergangstemperatur im Bereich von -10 bis +80 °C und vorzugsweise im Bereich von 0 bis +60 °C auf. Hierbei ist zu beachten, dass eine hochwertige Beschichtung nur dann erhalten wird, wenn die wässrige Zubereitung des filmbildenden Copolymers P eine Mindestfilmbildetemperatur unterhalb der Anwendungstemperatur aufweist. Die Mindestfilmbildetemperatur hängt nun ihrerseits von der Glasübergangstemperatur $T_G$ des Copolymeren P ab (siehe Ullmanns Encyclopedia of Industrial Chemistry, 5 ed, Vol. A 21, 1992, S. 169). Die Mindestfilmbildetemperatur lässt sich erniedrigen, in dem man der wässrigen Zubereitung sogenannte schwerflüchtige, äußere Weichmacher, z. B. Ester der Phthalsäure und/oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für das Copolymer P abzustimmen. So hat sich für die Beschichtung von Betonsteinen eine Glasübergangstemperatur $T_G$ für die Copolymere P oberhalb 0 °C und insbesondere oberhalb +10 °C als vorteilhaft erwiesen. Vorzugsweise wird bei dieser Ausführungsform der Erfindung die Glasübergangstemperatur $T_G$ +50 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +30 °C als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur $T_G$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \cdots \frac{X^n}{T_g^{\,n}}$$

wobei $X^1, X^2, ..., X^n$ die Massenbrüche 1, 2, ..., n und $T_g^1, T_g^2, ..., T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut,

Polymer Handbook 3rd ed, J. Wiley, New York 1989 bekannt.

Aus dem Gesagten wird deutlich, dass die Glastemperatur $T_G$ des Copolymeren P sowohl durch ein geeignetes Hauptmonomer a), das eine Glastemperatur im gewünschten Bereich aufweist, als auch durch Kombination wenigstens eines Monomers mit hoher Glasübergangstemperatur und wenigstens eines Monomers mit niedriger Glasübergangstemperatur eingestellt werden kann.

In einer bevorzugten Ausführungsform der vorliegenden Erfindung umfassen die das Polymer P konstituierenden Monomere wenigstens ein Monomer, dessen Homopolymerisat für den Grenzfall eines sehr hohen Molekulargewichts eine Glasübergangstemperatur $T_g$ > 30 °C aufweist, wie beispielsweise Styrol, α-Methylstyrol, Methylmethacrylat, Ethylmethacrylat, n- und iso-Propoylmethacrylat, n-, iso- und tert.-Butylmethacrylat sowie tert.-Butylacrylat, und wenigstens ein Monomer, dessen Homopolymerisat eine Glasübergangstemperatur $T_G$ < 20 °C aufweist, wie beispielsweise $C_1$-$C_{12}$-Alkylacrylate, Vinylversatate, aber insbesondere Ethylacrylat, n-Butylacrylat und 2-Ethylhexylacrylat. Besonders bevorzugt werden Monomerkombinationen von Monomeren mit $T_g$ > 30 °C und Monomeren mit $T_G$ < 20 °C, die Styrol und/oder Methylmethacrylat, gegebenenfalls zusammen mit tert.-Butylacrylat, n-Butylmethacrylat und/oder tert.-Butylmethacrylat als Monomere mit $T_g$ > 30 °C sowie n-Butylacrylat und/oder 2-Ethylhexylacrylat als Monomere mit $T_G$ < 20 °C umfassen. Üblicherweise liegt das Gewichtsverhältnis der Monomere mit $T_g$ > 30 °C zu Monomeren mit $T_G$ < 20 °C im Bereich von 20:80 bis 80:20 und insbesondere im Bereich von 35:65 bis 65:35. Typische Monomerkombinationen sind:

- Styrol: n-Butylacrylat im Gewichtsverhältnis 35:65 bis 80:20,
- Styrol: 2-Ethylhexylacrylat im Gewichtsverhältnis 35:65 bis 80:20,
- Methylmethacrylat: n-Butylacrylat im Gewichtsverhältnis 40:60 bis 80:20,
- Methylmethacrylat: 2-Ethylhexylacrylat im Gewichtsverhältnis 35:65 bis 80:20,
- ferner ternäre und quartäre Monomermischungen, bei denen ein Teil des Styrols durch Methylmethacrylat und/oder n-Butylmethacrylat ersetzt ist, oder ein Teil des n-Butylacrylats durch 2-Ethylhexylacrylat, z. B.:
    - Methylmethacrylat : Styrol : 2-Ethylhexylacrylat im Gewichtsverhältnis 20:20:60,
    - n-Butylmethacrylat : Styrol : 2-Ethylhexylacrylat im Gewichtsverhältnis 35:10:55,
    - Methylmethacrylat : n-Butylmethacrylat : n-Butylacrylat im Gewichtsverhältnis 30:35:35
    - Styrol : n-Butylacrylat : 2-Ethylhexylacrylat im Gewichtsverhältnis 50:25:25 und
    - Styrol : Methylmethacrylat : n-Butylacrylat : 2-Ethylhexylacrylat im Gewichtsverhältnis 20:20:30:30.

Die Herstellung der in den erfindungsgemäß zur Anwendung kommenden wässrigen Zubereitungen enthaltenen Copolymere P kann auf alle Arten der radikalischen Copolymerisation ethylenisch ungesättigter Monomere erfolgen, z. B. durch Lösungs-, Fällungs-, Substanz-, Emulsions- oder Suspensionspolymerisation. Bevorzugt wird die radikalische, wässrige Emulsionspolymerisation der vorgenannten Monomere in Gegenwart wenigstens eines radikalischen Polymerisationsinitiators und gegebenenfalls einer oder mehrerer grenzflächenaktiver Substanzen, da hierbei die Copolymere P in Form einer wässrigen Dispersion erhalten werden. Gegebenenfalls kann es bei Anwendung anderer Polymerisationsmethoden erforderlich sein, die Copolymere P nachträglich in eine wässrige Dispersion (Sekundärdispersion) zu überführen.

Erfindungsgemäß enthalten die filmbildenden wässrigen Zubereitungen das Copolymer P in Form einer wässrigen Dispersion. Hierin können die Copolymerteilchen mittlere Teilchengrößen im Bereich von 50 bis 1 000 nm aufweisen. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate oder Wasserstoffperoxid als auch um Azoverbindungen handeln. Bevorzugt werden Redoxinitiatorsysteme verwendet, die aus wenigstens einem organischen Reduktionsmittel und wenigstens einem Peroxid und/oder Hydroperoxid zusammengesetzt sind, z. B. tert.-Butylhydroperoxid mit einer Schwefelverbindung, z. B. dem Natriumsalz der Hydroxymethansulfinsäure, Natriumsulfit, Natriumdisulfit, Natriumthiosulfat oder Acetonbissulfit oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Eisen(II)sulfat. Ebenfalls bevorzugte Initiatoren sind Alkaliperoxodisulfate, wie Natriumperoxodisulfat oder Ammoniumperoxodisulfat. vorzugsweise beträgt die Menge der eingesetzten radikalischen Initiatorsysteme, bezogen auf die Gesamtmenge der zu polymerisierenden Monomere, 0,05 bis 2 Gew.-%, vorzugsweise 0,1 bis 1 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1 bis 4 Gew.-%,

bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Auch Gemische aus Emulgatoren und/oder Schutzkolloiden können verwendet werden.

Vorzugsweise werden als grenzflächenaktive Substanzen ausschließlich Emulgatoren eingesetzt, deren relative Molekulargewichte im Unterschied zu den Schutzkolloiden üblicherweise unter 2 000 liegen. Sie sind vorzugsweise anionischer oder nichtionischer Natur. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Verbindungen der allgemeinen Formel I,

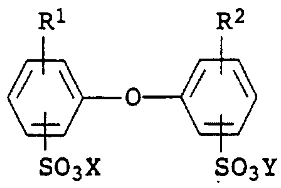

(I)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. Die Verbindungen I sind allgemein bekannt, z. B. aus der EP-A 469 295. Besonders vorteilhaft sind Verbindungen I, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere.

Bevorzugt werden anionische Emulgatoren, insbesondere Emulgatoren der allgemeinen Formel I, oder Kombinationen aus wenigstens zwei anionischen oder wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Allylalkohole oder Aldehyde eingestellt werden. Durch geeignete Regler können auch Silicium enthaltende Gruppen in das Copolymer eingeführt werden, z. B. durch Mercaptoalkyltrialkoxysilane wie Mercaptopropyltrimethoxysilan.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie Encyclopedia of Polymer Science and Technology, Vol. 5, John Wiley & Sons Inc., New York 1966, S. 847).

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A

44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Die erfindungsgemäß zur Anwendung kommenden Zubereitungen können grundsätzlich beliebig, d. h. lösungsmittelhaltig oder lösungsmittelfrei ausgestaltet werden. Als Dispergiermedium werden er-findungsgemäß Wasser oder Mischungen aus Wasser und einem mit Wasser mischbaren organischen Lösungsmittel, z. B. einem $C_1$-$C_4$-Alkanol, wie Methanol, Ethanol, n- oder iso-Propanol, n-, iso-, 2-oder tert.-Butanol, Glykol, Propylenglykol, Butylenglykol, Glycerin, Diethylenglykol, Triethylenglykol, Tetrahydrofuran o. ä. verwendet.

Bevorzugt enthalten die erfindungsgemäß verwendeten Zubereitungen nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel.

Ferner enthalten die wässrigen Zubereitungen, sofern die Herstellung der Copolymere P durch radikalische, wässrige Emulsionspolymerisation erfolgt ist, auch die für diesen Zweck eingesetzten, grenzflächenaktiven Substanzen, wie Emulgatoren und/oder Schutzkolloide.

Die Lösungen bzw. Dispersionen der Copolymere P können erfindungsgemäß als solche verwendet werden. Die Zubereitungen enthalten jedoch in der Regel 0,1 bis 30 Gew.-% übliche Hilfsmittel. Vorzugsweise enthalten die erfindungsgemäß verwendeten Zubereitungen, bezogen auf ihr Gesamtgewicht,

i. 10 bis 60 Gew.-% wenigstens eines Copolymers P und
ii. 0,1 bis 20 Gew.-% übliche Hilfsmittel.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit $C_1$-$C_4$-Alkanolen, z. B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z. B. Texanol® der Eastman Kodak oder deren technische Gemische davon, z. B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oliqo)propylenglykolalkylphenylether, wie sie z. B. als Plastilit® 3060 der BASF AG im Handel erhältlich sind, in Frage.

Ferner können die erfindungsgemäß zur Anwendung kommenden wässrigen Zubereitungen auch anorganische Füllstoffe und/oder Pigmente enthalten. Vorzugsweise enthalten die erfindungsgemäß verwendeten Zubereitungen dann, bezogen auf ihr Gesamtgewicht,

i. 10 bis 60 Gew.-% wenigstens eines Polymers P,
ii. 0,1 bis 20 Gew.-% übliche Hilfsmittel,
iii.10 bis 60 Gew.-% wenigstens eines feinteiligen Füllstoffs und/oder eines anorganischen Pigments.

Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken enthalten die Zubereitungen häufig farbige Pigmente, beispielsweise Eisenoxide, Ruß oder Graphit. Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc.

In einer bevorzugten Ausführungsform der vorliegenden Erfindung werden die wässrigen Zubereitungen in Form eines Klarlacks verwendet. Sie enthalten dann in der Regel, bezogen auf ihr Gesamtgewicht, 10 bis 60 Gew.-%, vorzugsweise 40 bis 55 Gew.-% wenigstens eines Copolymers P und 0,1 bis 20 Gew.-%, vorzugsweise 0,5 bis 10 Gew.-% übliche Hilfsmittel, insbesondere Entschäumer und/oder Filmbildehilfsmittel. Insbesondere enthalten diese wässrigen Zubereitungen vorteilhaft ein Copolymer P mit einer Glasübergangstemperatur $T_g$ im Bereich von +20 bis +50 °C, bevorzugt von +30 bis +45 °C, und einem Gehalt an vernetzend wirkenden Monomeren (Monomere c)), bevorzugt Methacrylsäureallylester, im Bereich von 0,5 bis 2,0 Gew.-% und bevorzugt im Bereich von 0,75 bis 1,5 Gew.-%.

In einer anderen Ausführungsform der vorliegenden Erfindung werden die wässrigen Zubereitungen in Form

pigment- und/oder füllstoffhaltiger Zubereitungen verwendet. In diesem Fall liegt der Gesamtgehalt an Copolymer P in der wässrigen Zubereitung im Bereich von 10 bis 60 Gew.-%, vorzugsweise im Bereich von 20 bis 40 Gew.-%, der Gehalt an Hilfsmitteln im Bereich von 0,1 bis 20 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten. Insbesondere enthalten diese pigmentierten und/oder gefüllten wässrigen Zubereitungen vorteilhaft ein Copolymer P mit einer Glasübergangstemperatur $T_g$ im Bereich von 0 bis +30 °C, bevorzugt von +5 bis +25 °C, und einem Gehalt an vernetzend wirkenden Monomeren (Monomere c)), bevorzugt Methacrylsäureallylester, im Bereich von 0,05 bis 0,20 Gew.-% und bevorzugt im Bereich von 0,075 bis 0,15 Gew.-%.

Die vorliegende Erfindung betrifft auch ein Verfahren zur Beschichtung mineralischer Formkörper, wobei man wenigstens eine wässrige filmbildende Zubereitung, wie zuvor beschrieben, auf den mineralischen Formkörper aufbringt. In der Regel wird die aufzutragende Menge der wässrigen Zubereitungen im Bereich von 100 bis 700 g/m$^2$ (nass gerechnet) betragen. Dies entspricht einem getrockneten Auftrag von 50 bis 400 g/m$^2$ und insbesondere einem trockenen Auftrag von 100 bis 300 g/m$^2$. Der Auftrag kann in an sich bekannter Weise durch Spritzen, Spachteln, Rakeln, Rollen oder Gießen erfolgen. Die sich in der Regel anschließende Trocknung kann sowohl bei Raumtemperatur als auch bei erhöhter Temperatur, beispielsweise im Bereich von 40 bis 120 °C erfolgen.

In einer üblichen Ausführungsform des erfindungsgemäßen Verfahrens versieht man den mineralischen Formkörper mit wenigstens zwei Beschichtungen. Hierzu bringt man in einem ersten Schritt eine erste wässrige, filmbildenden Zubereitung 1 auf den noch unbehandelten mineralischen Formkörper auf, trocknet gegebenenfalls und bringt dann in einem zweiten Schritt eine weitere wässrige, filmbildende Zubereitung 2 auf den mit der ersten Beschichtung versehenen Formkörper auf. Der erste Schritt als auch der zweite Schritt können wiederholt werden, so dass man auf diesem Wege zu Beschichtungen mit drei oder mehr Schichten gelangen kann.

Die vorliegende Erfindung betrifft weiterhin ein Verfahren zur Beschichtung mineralischer Formkörper, wobei man einen unbehandelten mineralischen Formkörper mit wenigstens einer ersten Beschichtung versieht, indem man wenigstens eine erste wässrige filmbildende Zubereitung (Zubereitung 1), die wenigstens ein Copolymer P oder ein aus ethylenisch ungesättigten Monomeren aufgebautes Copolymer P' mit einer Glasübergangstemperatur im Bereich von -20 bis +80 °C in dispers verteilter Form enthält, auf den mineralischen Formkörper aufbringt und anschließend trocknet, diesen Vorgang gegebenenfalls wiederholt und anschließend wenigstens eine weitere wässrige filmbildende Zubereitung (Zubereitung 2), enthaltend wenigstens ein Copolymer P wie zuvor beschrieben, auf den mit wenigstens einer ersten Schicht versehenen mineralischen Formkörper als Deckschicht aufbringt.

Besonders bevorzugt ist, dass der filmbildende Bestandteil der als Deckschicht aufgebrachten wässrigen Zubereitung 2 das zuvor definierte Copolymer P ist, vorzugsweise in der zuvor beschriebenen Ausführungsform für Klarlacke. Hingegen kann der filmbildende Bestandteil der ersten wässrigen Zubereitung 1 ausgewählt werden unter den Copolymeren P, vorzugsweise in der zuvor beschriebenen Ausführungsform für pigmentierte und/oder gefüllte Zubereitungen, als auch unter davon verschiedenen Polymeren P'. Letztgenannte sind in der Regel ebenfalls aus ethylenisch ungesättigten Monomeren aufgebaut und liegen in der ersten wässrigen Zubereitung in dispergierter Form vor. Erfindungsgemäß wird das Polymer P' ähnlich dem Copolymer P eine Glasübergangstemperatur im Bereich von -20 bis +80 °C aufweisen. In einer bevorzugten Ausführungsform der vorliegenden Erfindung ist der filmbildende Bestandteil der wässrigen Zubereitung 1 ein von dem Copolymer P verschiedenes Polymer P'.

Als Polymere P' kommen all jene Polymere in Frage, die üblicherweise in wässrigen Zubereitungen für die Beschichtung mineralischer Formkörper enthalten sind. Typische Polymere P' und entsprechende wässrige, filmbildende Zubereitungen, die für die Erstbeschichtung mineralischer Formkörper geeignet sind, werden beispielsweise in der EP-A 469 295 und der DE-A 195 14 266 beschrieben. Auf die Offenbarung dieser Schriften wird hiermit in vollem Umfang Bezug genommen.

Üblicherweise sind die das Polymer P' konstituierenden Monomere überwiegend unter den vorgenannten Monomeren a) und b) ausgewählt, wobei das Polymer P' bis zu 30 Gew.-% von den Monomeren a), b) und c) verschiedene Monomere einpolymerisiert enthalten kann. In vielen Fällen unterscheiden sich die Polymere P' von den Copolymeren P im wesentlichen dadurch, dass sie keine vernetzend wirkende Monomere c) enthalten.

In der Regel werden 65 bis 99,9 Gew.-% der das Polymer P' konstituierenden Monomere ausgewählt sein unter vinylaromatischen Monomeren, insbesondere Styrol und $\alpha$-Methylstyrol, den vorgenannten Estern der Acrylsäure mit $C_1$-$C_{12}$-Alkanolen, den vorgenannten Estern der Methacrylsäure mit $C_1$-$C_8$-Alkanolen und den Vinylestern aliphatischer Monocarbonsäuren, wobei bis zu 70 Gew.-% der Monomere auch unter den Estern der Methacrylsäure mit $C_1$-$C_4$-Alkanolen ausgewählt sein können und/oder wenigstens 50 Gew.-% Methylmethacrylat sind. Ferner umfassen die das Polymer P' konstituierenden Monomere in der Regel 0,1 bis 30 Gew.-%, vorzugsweise 0,2 bis 20 Gew.-% und insbesondere 0,5 bis 5 Gew.-% davon verschiedene Monomere.

Die Polymere P' können durch die für die Copolymere P beschriebenen Herstellungsverfahren hergestellt

werden, wobei die Herstellung durch radikalische, wässrige Emulsionspolymerisation auch für die Polymere P' bevorzugt ist.

Vorzugsweise werden die wässrigen Dispersionen der Polymere P' als auch der Copolymere P nach ihrer Herstellung durch Zugabe einer Base, z. B. Ammoniak, schwerflüchtigen Aminen, Alkalimetalloder Erdalkalimetallhydroxiden, Erdalkalimetalloxiden neutralisiert. Der pH-Wert der Dispersionen liegt nach der Neutralisation vorzugsweise im Bereich von pH 6 bis pH 9. Bevorzugt ist die Neutralisation mit Ammoniak oder mit Alkalimetallhydroxiden, insbesondere mit Natriumhydroxid. Bei der Neutralisation mit Natriumhydroxid hat es sich.als Vorteil erwiesen, wenn der pH-Wert nach der Neutralisation im Bereich von pH 7,0 bis 7,9 liegt. Insbesondere hat es sich als vorteilhaft erwiesen, wenn während und nach der Zugabe des Alkalihydroxids ein pH-Wert von 7,9 nicht überschritten wird.

In einer bevorzugten Ausführungsform der vorliegenden Erfindung enthält die wässrige, filmbildende Zubereitung 1 neben dem Filmbildenden Bestandteil und den üblichen Hilfsmitteln wenigstens einen feinteiligen Füllstoff und/oder ein anorganisches Pigment. Der Gehalt an Copolymer P bzw. Polymer P' liegt in der Zubereitung 1, bezogen auf ihr Gesamtgewicht, im Bereich von 10 bis 60 Gew.-%, vorzugsweise im Bereich von 20 bis 40 Gew.-%. Der Gehalt an Hilfsmitteln liegt in der Regel im Bereich von 0,1 bis 20 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 50 Gew.-%. Die Menge an Pigmenten und/oder Füllstoffen liegt im Allgemeinen zwischen 50 und 450 Gewichtsteilen, bezogen auf 100 Gewichtsteile Copolymer P bzw. Polymer P' in der wässrigen Zubereitung 1. Ferner werden pigmenthaltige Zubereitungen neben den Filmbildehilfsmitteln und den Entschäumern vorzugsweise auch ein Dispergier- bzw. Netzmittel enthalten.

In dieser bevorzugten Ausführungsform kann der Pigmentgehalt der wässrigen Zubereitung 2 gleich dem Pigmentgehalt der wässrigen Zubereitung 1 sein. Vorzugsweise ist er jedoch deutlich geringer d. h. der Unterschied der Pigmentkonzentration beträgt wenigstens 10 Gew.-%. Die Pigmentkonzentration der zweiten Zubereitung ist insbesondere ≤ 20 Gew.-%, bezogen auf das Gesamtgewicht der Zubereitung 2. Die Zubereitung 2 kann auch frei von Pigmenten verwendet werden. Hierdurch gelangt man zu besonders glänzenden Beschichtungen.

Die vorliegende Erfindung betrifft somit auch ein Verfahren, das dadurch gekennzeichnet ist, dass die erste wässrige filmbildende Zubereitung (Zubereitung 1), bezogen auf ihr Gesamtgewicht,

i. 10 bis 60 Gew.-% wenigstens eines Polymers P'
ii. 0,1 bis 20 Gew.-% übliche Hilfsmittel und
iii. 10 bis 60 Gew.-% wenigstens eines feinteiligen Füllstoffs und/oder eines anorganischen Pigments

enthält, und die zweite wässrige filmbildende Zubereitung (Zubereitung 2), bezogen auf ihr Gesamtgewicht,

i. 10 bis 60 Gew.-% wenigstens eines Polymers P,
ii. 0,1 bis 20 Gew.-% übliche Hilfsmittel enthält und
iii. einen um mindestens 10 Gew.-% geringeren Gesamtgehalt an Pigment/Füllstoff als die erste Zubereitung

aufweist.

Üblicherweise wird man in dieser Ausführungsform die Zubereitung 1 in einer Menge von 70 bis 300 $g/m^2$ (nass gerechnet) und die Zubereitung 2 in einer Menge von 30 bis 150 $g/m^2$ auf den mineralischen Formkörper aufbringen. Üblicherweise liegt das Gew.-Verhältnis der aufgetragenen Menge von Zubereitung 1 zu Zubereitung 2 im Bereich von 4:1 bis 1:1,5 und insbesondere im Bereich von 3:1 bis 1,2:1.

Das erfindungsgemäße Verfahren ist grundsätzlich auf alle Formkörper anwendbar, die ein mineralisches Bindemittel enthalten. Seine bevorzugten Wirkungen entfaltet es bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen, wässrigen Zubereitungen bieten nunmehr den Vorteil, dass sie nicht nur auf den fertig abgebundenen, sondern auch auf den frisch zubereiteten, nicht vollständig abgebundenen "grünen" Betonstein aufgebracht werden können.

Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat der Beschichtungsmasse verfilmt. Nach diesem Prozess wird der Stein vorzugsweise ein zweites Mal mit der erfindungsgemäßen, wässrigen Zubereitung besprüht. Eine erneute Trocknung erfolgt in einem Tunnelofen bei etwa um 100 °C liegenden Umlufttemperaturen.

Bereits abgebundene mineralische Formkörper können auch bei üblichen Umgebungstemperaturen, z. B.

Raumtemperatur, mit den erfindungsgemäßen Zubereitungen beschichtet werden.

Die vorteilhaften Eigenschaften der erfindungsgemäßen, wässrigen Zubereitungen kommen auch bei mineralischen Formkörpern zum Tragen, die mit einem Zementslurry beschichtet sind. Dieser Zementslurry umfasst in der Regel übliche Pigmente, einen Zement als mineralisches Bindemittel, übliche Hilfsmittel und Wasser in geeigneter Menge und wird auf den mineralischen Formkörper, vorzugsweise einen Betonstein, der noch nicht endgültig abgebunden hat, aufgebracht. Die Zementslurryschicht weist im abgebundenen Zustand eine Schichtdicke im Bereich von 200 µm bis 2 000 µm auf. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die erfindungsgemäß beschichteten mineralischen Formkörper zeichnen sich zum einen dadurch aus, dass ihre Beschichtung eine deutlich höhere Langzeitstabilität bei Freilandbewitterung aufweisen. Insbesondere lässt der Glanz der Beschichtung auch nach mehrjähriger Bewitterung kaum nach. Die Haftung der Beschichtung auf den mineralischen Formkörpern ist sowohl in frischem Zustand als auch nach Bewitterung hoch. Zudem sind die beschichteten Formkörper wirksam vor Ausblühungen geschützt. Diese Eigenschaft ist insbesondere für Betondachsteine von Bedeutung, die daher eine bevorzugte Ausführungsform der Erfindung darstellen. Darüber hinaus sind die Beschichtungen blockfest.

Demnach führt die Verwendung der erfindungsgemäßen, wässrigen Zubereitungen zu einer verbesserten Konservierung der Oberfläche von mineralischen Formkörpern mit erhöhter Glanzstabilität und hoher Langzeithaltbarkeit. Die derart beschichteten mineralischen Formkörper sind neu und ebenfalls Gegenstand der vorliegenden Erfindung.

Die im Folgenden angegebenen Beispiele sollen die vorliegende Erfindung verdeutlichen.

Beispiele

I. Herstellung der filmbildenden Copolymere P und Polymere P' in Form wässriger Dispersionen (Dispersionen ED1, VD1 und D2)

1. Herstellungsvorschrift ED1 (erfindungsgemäß)

In einem Polymerisationsgefäß legte man 700,0 g entionisiertes Wasser und 43,3 g Emulgatorlösung 1 vor und erwärmt auf 95 °C.

In einem Zulaufgefäß 1 stellte man eine Emulsion aus:

| | |
|---|---|
| 602,5 g | entionisiertem Wasser |
| 11,6 g | Emulgatorlösung 2 |
| 546,0 g | n-Butylacrylat |
| 754,0 g | Methylmethacrylat |
| 19,5 g | Acrylsäure |
| 23,4 g | 20 gew.-%ige Lösung von Acrylamid in Wasser |
| 13,0 g | Methacrylsäureallylester her. |

In einem zweiten Zulaufgefäß 2 stellte man eine Lösung von 3,9 g Natriumpersulfat in 200,0 g Wasser her. Dann gab man unter Beibehaltung der 95 °C nacheinander in einer Portion 100 g von Zulauf 1 und 20,4 g von Zulauf 2 in die Vorlage und ließ 12 min reagieren. Anschließend gab man über räumlich getrennte Zuläufe, zeitgleich beginnend, die Restmengen von Zulauf 1 und Zulauf 2 innerhalb von 3 h unter Beibehaltung der 95 °C in das Polymerisationsgefäß. Nach Beendigung von Zulauf 2 ließ man 30 min nachpolymerisieren, kühlte auf 25 °C ab und neutralisierte mit Natronlauge (pH ≈ 7,5).

Der Feststoffgehalt der erhaltenen Dispersion lag bei 45 Gew.-%. Die mittels DSC ermittelte Glasübergangstemperatur lag bei 38 °C.

Emulgatorlösung 1: 45 gew.-%ige wässrige Lösung einer als Dowfax® 2A1 (Dow Chemical) im Handel üblichen Wirksubstanz (Gemisch von Monound Bisdodecyl-Verbindung der allgemeinen Formel I

als Natriumsalz).

2. Herstellungsvorschrift für VD1 (nicht erfindungsgemäßes (Co)polymer P')

In einem Polymerisationsgefäß legte man 700,0 g entionisiertes Wasser und 43,3 g Emulgatorlösung 1 vor und erwärmt auf 95 °C.

In einem Zulaufgefäß 1 stellte man eine Emulsion aus:

| | |
|---|---|
| 602,5 g | entionisiertem Wasser |
| 11,6 g | Emulgatorlösung 2 |
| 546,0 g | n-Butylacrylat |
| 754,0 g | Methylmethacrylat |
| 19,5 g | Acrylsäure |
| 23,4 g | 20 gew.-%ige Lösung von Acrylamid in Wasser her. |

In einem zweiten Zulaufgefäß 2 stellte man eine Lösung von 3,9 g Natriumpersulfat in 200,0 g Wasser her. Dann gab man unter Beibehaltung der 95 °C nacheinander in einer Portion 100 g von Zulauf 1 und 20,4 g von Zulauf 2 in die Vorlage und ließ 12 min reagieren. Anschließend gab man über räumlich getrennte Zuläufe, zeitgleich beginnend, die Restmengen von Zulauf 1 und Zulauf 2 innerhalb von 3 h unter Beibehaltung der 95 °C in das Polymerisationsgefäß. Nach Beendigung von Zulauf 2 ließ man 30 min nachpolymerisieren, kühlte auf 25 °C ab und neutralisierte mit Natronlauge (pH ≈ 7,5).

Der Feststoffgehalt der erhaltenen Dispersion lag bei 45 Gew.-%. Die mittels DSC ermittelte Glasübergangstemperatur lag bei 36 °C.

Emulgatorlösung 1: 45 gew.-%ige wässrige Lösung einer als Dowfax® 2A1 (Dow Chemical) im Handel üblichen Wirksubstanz (Gemisch von Monound Bisdodecyl-Verbindung der allgemeinen Formel I als Natriumsalz).

3. Herstellungsvorschrift D1 (Polymer P')

In einem Polymerisationsgefäß legte man 400 g entionisiertes Wasser und 6,22 g Emulgatorlösung 1 vor und erwärmt auf 85 °C.

In einem Zulaufgefäß 1 stellte man eine Emulsion aus:

| | |
|---|---|
| 200,0 g | entionisiertem Wasser |
| 37,3 g | Emulgatorlösung 1 |
| 9,3 g | Emulgatorlösung 2 |
| 413,0 g | Methylmethacrylat |
| 287,0 g | n-Butylacrylat |
| 14,0 g | Acrylsäure und |
| 7,0 g | 50 gew.-%ige Lösung von Acrylamid in Wasser her. |

In einem zweiten Zulaufgefäß 2 stellte man eine Lösung von 1,4 g Natriumperoxodisulfat in 75 g Wasser her.

Anschließend gab man unter Beibehaltung der 85 °C nacheinander in einer Portion 49 g von Zulauf 1 und 7,6 g von Zulauf 2 in die Vorlage und ließ 30 min reagieren.

Anschließend gab man, über räumlich getrennte Zuläufe zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren, kühlte auf 25 °C ab und neutralisierte mit Natronlauge (pH ≈ 8).

Der Feststoffgehalt der erhaltenen Dispersionen lag bei etwa 49 Gew.-%. Glasübergangstemperatur (DSC) 38 °C

Emulgatorlösung 2: 45 gew.-%ige wässrige Lösung einer als Dowfax® 2A1 (Dow Chemical) im Handel üblichen Wirksubstanz (Gemisch von Monound Di-$C_1$-$C_{12}$-alkyl-Verbindung der allgemeinen Formel I als Natriumsalz).

Emulgatorlösung 1: 15 gew.-%ige wässrige Lösung des Natriumsalzes eines $C_{12}$-Alkylsulfats

4. Herstellungsvorschrift D2 (Polymer P')

Die Herstellung von D2 erfolgte analog zur Herstellung von D1 mit dem Unterschied, dass Methylmethacrylat vollständig durch Styrol ersetzte wurde. Feststoffgehalt 49 Gew.-%; Glasübergangstemperatur 40 °C (DSC).

II. Herstellung von beschichteten mineralischen Formkörpern

Je 100 g der Dispersionen ED1, VD1, D1 und D2 wurden mit 0,5 g eines Entschäumers (Tego Foamex® 825 der Th. Goldschmidt AG) und 5 g eines technischen Gemisches der Di-n-butylester der Bernstein-, Glutar- und Adipinsäure versetzt und somit zu den Dispersionen EDK1, VDK1, DK1 und DK2 konfektioniert.

IIa. Herstellung eines klarlackbeschichteten mineralischen Formkörpers

Die so konfektionierten Dispersionen EDK1 und VDK1 wurden mittels einer Spritzpistole auf einen "grünen" Betonstein*) aufgebracht (Auftrag etwa 250 g/$m^2$; sog. Nassauftrag). Anschließend trocknet man 2 h bei 40 °C und 75 % rel. Luftfeuchte und dann 4 h bei 40 °C und 95 % rel. Luftfeuchte.

IIb. Herstellung eines zweifach beschichteten mineralischen Formkörpers

Aus den so konfektionierten Dispersionen EDK1, VDK1, DK1 und DK2 wurden Dispersionsfarben EDF1, VDF1, DF1 und DF2 formuliert.

Herstellung der Dispersionsfarbe DF1 mit PVK 27:

Zu diesem Zweck suspendierte man 253,0 g eines handelsüblichen Füllstoffs (Calciumcarbonat/Calciumsilikat) und 38,8 g Eisenoxid-Rotpigment der BAYER AG in 112,0 g Wasser. Hierzu gab man unter Rühren 598,0 g der konfektionierten Dispersion DK1. Hierbei wurde eine Farbe DF1 mit einer PVK (Pigmentvolumenkonzentration) von 27 erhalten.

Analog stellte man aus der konfektionierten Dispersion DK2 eine Farbe DF2 mit einer PVK von 40 her (372 g Füllstoff, 57 g Eisenoxid-Rotpigment, 164 g Wasser und 408 g Dispersion D2).

Analog stellte man aus der konfektionierten Dispersion EDK1 eine Farbe EDF1 und aus der konfektionierten Dispersion VDK1 eine Farbe VDF1, jeweils mit einer PVK von 10 her (104 g Füllstoff, 16 g Pigment, 46 g Wasser und 835 g Dispersion).

Die so erhaltenen Farben DF1, DF2, EDF1 und VDF1 ließ man vor ihrer anwendungstechnischen Prüfung 48 h bei Raumtemperatur reifen. Anschließend wurde die Farbe mittels einer Spritzpistole auf einen "grünen" Betonstein (siehe IIa) aufgebracht (Auftrag etwa 320 g/$m^2$, bezogen auf den Farbauftrag; sog. Nassauftrag). Anschließend trocknet man 2 h bei 40 °C und 75 % rel. Luftfeuchte und dann 4 h bei 40 °C und 95 % rel. Luftfeuchte. Danach brachte man in der gleichen Weise eine zweite Beschichtung aus den konfektionierten Dispersionen EDK1 bzw. VDK1 oder aus den Farben EDF1 bzw. VDF1 auf (etwa 160 g/$m^2$, bezogen auf die Farbe) und trocknete 8 h bei 40 °C und 50 % rel. Luftfeuchte (sog. Trockenauftrag).

III. Prüfung der anwendungstechnischen Eigenschaften

1) Bestimmung des Glanzes eines Betonsteins bei simulierter Feuchtbewitterung.

Hierzu wurde ein nach II hergestellter Stein 7 d mit dem Gesicht auf ein 60 °C warmes Wasserbad gelegt. Der Grad der Ausblühungen wurde visuell beurteilt. Hierfür wird folgende Notenskala zugrunde gelegt. Die Ergebnisse sind in Tabelle 1 zusammengefasst.

0 = sehr hoher Glanz
1 = x hoher Glanz
2 = mäßiger Glanz
3 = geringer Glanz

*) Als "grüner" Betonstein diente ein gewölbter Stein mit Grundfläche von 30 x 20 cm und einer Stärke von 1,8 cm der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde. Der Scheitelpunkt der Wölbung lag etwa 4 cm oberhalb der Grundfläche.

4 = schwacher Glanz bis matt
5 = matt, stumpf

2) Bestimmung des Glanzes eines Betonsteins bei Freilandbewitterung.

Ein nach II hergestellter Betonstein wurde auf einem Freibewitterungsstand bei Ludwigshafen a. Rh, Deutschland mit einer Neigung von 45° aufgestellt, wobei die beschichtete Seite nach Süden zeigte. Nach drei Jahren wurde der Glanz der Beschichtung visuell beurteilt. Die Ergebnisse sind in Tabelle 1 zusammengefasst. Es wurde folgende Notenskala zugrundegelegt:

0 = sehr hoher Glanz
1 = hoher Glanz
2 = mäßiger Glanz
3 = xgeringer Glanz
4 = schwacher Glanz bis matt
5 = matt, stumpf

Tabelle 1:

| Ergebnisse der Beispiele erfindungsgemäßen Beispiele B1 bis B6 und der Vergleichsbeispiele VB1 bis VB6 | | | | |
|---|---|---|---|---|
| | Erstauftrag (Nassseite) [PVK] | Zweitauftrag (Trockenseite) [PVK] | Glanz bei Feuchtbewitterung | Glanz bei Freilandbewitterung |
| B1 | EDK1 [0] | - | 1 | 3 |
| VB1 | VDK1 [0] | - | 1 | 5 |
| B2 | EDF1 [10] | - | 3 | 3 |
| VB2 | VDF1 [10] | - | 3 | 5 |
| B3 | DF1 [27] | EDK1 [0] | 1 | 3 |
| VB3 | DF1 [27] | VDK1 [0] | 1 | 5 |
| B4 | DF1 [27] | EDF1 [10] | 3 | 3 |
| VB4 | DF1 [27] | VDF1 [10] | 3 | 5 |
| B5 | DF2 [40] | EDK1 [0] | 1 | 3 |
| VB5 | DF2 [40] | VDK1 [0] | 1 | 5 |
| B6 | DF2 [40] | EDF1 [10] | 3 | 3 |
| VB6 | DF2 [40] | VDF1 [10] | 3 | 5 |

Darüber hinaus zeichnen sich die erfindungsgemäß verwendeten Zubereitungen durch gute Konservierungseigenschaften (Schutz vor Ausblühungen) und gute Haftungseigenschaften, sowohl auf mineralischen Formkörpern als auch auf zuvor aufgebrachten Zubereitungen, aus.

## Patentansprüche

**1.** Verwendung von wässrigen filmbildenden Zubereitungen, die wenigstens ein aus ethylenisch ungesättigten Monomeren aufgebautes Copolymer P in dispers verteilter Form enthalten, das

a) 80 bis 99,89 Gew.-% mindestens eines Monomers, ausgewählt unter Estern der Acrylsäure mit $C_1$-$C_{12}$-Alkanolen, Estern der Methacrylsäure mit $C_1$-$C_8$-Alkanolen und Monovinylaromaten,

b) 0,1 bis 19,99 Gew.-% mindestens eines davon verschiedenen Monomers, ausgewählt unter α,β-ethylenisch ungesättigten $C_3$-$C_6$-Mono- und Dicarbonsäuren, den Amiden, N-Alkylamiden und Nitrilen dieser Carbonsäuren, Halbestern α,β-monoethylenisch ungesättigter $C_4$-$C_8$-Dicarbonsäuren mit $C_1$-$C_{12}$-Alkanolen, Vinylestern aliphatischer $C_1$-$C_{18}$-Carbonsäuren, α,β-monoethylenisch ungesättigten Sulfonsäuren und Sulfonsäureestern

und α,β-monoethylenisch ungesättigten Siloxanen, und

c) 0,01 bis 1,9 Gew.-% mindestens eines vernetzend wirkenden Monomers, ausgewählt unter Estern der Acrylsäure oder Methacrylsäure mit linearen oder verzweigten $C_3$-$C_6$-Alkenolen, cyclischen $C_5$-$C_7$-Alkenolen und polycyclischen $C_7$- bis $C_{12}$-Alkenolen

einpolymerisiert enthält, wobei der Gesamtgehalt an freie Säuregruppen tragenden Monomeren, bezogen auf die Gesamtmenge aller einpolymerisierten Monomeren, kleiner als 5 Gew.-% ist, zur Beschichtung mineralischer Formkörper.

**2.** Verwendung nach Anspruch 1, wobei das Copolymer P als Monomer a) wenigstens einen Ester der Acrylsäure mit linearen und verzweigten $C_4$-$C_8$-Alkanolen und wenigstens ein weiteres Monomer, ausgewählt unter den Estern der Methacrylsäure mit $C_1$und linearen $C_2$-$C_4$-Alkanolen und Vinylaromaten, einpolymerisiert enthält.

**3.** Verwendung nach Anspruch 1 oder 2, wobei das vernetzend wirkenden Monomer c) ausgewählt ist unter Acrylsäureallylester, Acrylsäuremethallylester, Methacrylsäureallylester und Methacrylsäuremethallylester und Gemischen davon.

**4.** Verwendung nach einem der vorhergehenden Ansprüche, wobei das Monomer b) ausgewählt ist unter Acrylsäure, Methacrylsäure, Maleinsäure, Acrylamid, Methacrylamid, Acrylnitril und Methacrylnitril und Gemischen davon.

**5.** Verwendung nach einem der vorhergehenden Ansprüche, wobei die filmbildende wässrige Zubereitung, bezogen auf ihr Gesamtgewicht,

i. 10 bis 60 Gew.-% wenigstens eines Copolymers P und
ii. 0,1 bis 20 Gew.-% übliche Hilfsmittel

enthält.

**6.** Verwendung nach einem der vorhergehenden Ansprüche, wobei die filmbildende wässrige Zubereitung, bezogen auf ihr Gesamtgewicht,

i. 10 bis 60 Gew.-% wenigstens eines Polymers P,
ii. 0,1 bis 20 Gew.-% übliche Hilfsmittel,
iii.10 bis 60 Gew.-% wenigstens eines feinteiligen Füllstoffs und/oder eines anorganischen Pigments

enthält.

**7.** Verfahren zur Beschichtung mineralischer Formkörper, **dadurch gekennzeichnet, dass** man wenigstens eine in einem der Ansprüche 1 bis 6 definierte wässrige filmbildende Zubereitung auf den mineralischen Formkörper aufbringt.

**8.** Verfahren gemäß Anspruch 7, **dadurch gekennzeichnet, dass** man einen unbehandelten mineralischen Formkörper mit wenigstens einer ersten Beschichtung versieht, indem man wenigstens eine erste wässrige filmbildende Zubereitung, die wenigstens ein Copolymer P oder ein aus ethylenisch ungesättigten Monomeren aufgebautes Copolymer P' mit einer Glasübergangstemperatur im Bereich von -20 bis +80 °C in dispers verteilter Form enthält, auf den mineralischen Formkörper aufbringt und anschließend trocknet, diesen Vorgang gegebenenfalls wiederholt und anschließend wenigstens eine weitere in einem der Ansprüche 1 bis 6 definierte wässrige filmbildende Zubereitung auf den mit wenigstens einer ersten Schicht versehenen mineralischen Formkörper als Deckschicht aufbringt.

**9.** Verfahren nach Anspruch 8, **dadurch gekennzeichnet, dass** die erste wässrige filmbildende Zubereitung, bezogen auf ihr Gesamtgewicht

i. 10 bis 60 Gew.-% wenigstens eines Polymers P'
ii. 0,1 bis 20 Gew.-% übliche Hilfsmittel und
iii.10 bis 60 Gew.-% wenigstens eines feinteiligen Füllstoffs und/oder eines anorganischen Pigments

enthält und die zweite wässrige filmbildende Zubereitung, bezogen auf ihr Gesamtgewicht,

i. 10 bis 60 Gew.-% wenigstens eines Copolymers P,
ii. 0,1 bis 20 Gew.-% übliche Hilfsmittel

enthält und

iii.einen um mindestens 10 Gew.-% geringeren Gesamtgehalt an Pigment/Füllstoff als die erste Zubereitung

aufweist.

**10.** Mineralischer Formkörper, erhältlich nach einem der Ansprüche 7 bis 9.

**11.** Wässrige, filmbildende Zubereitung, enthaltend wenigstens ein aus ethylenisch ungesättigten Monomeren aufgebautes Copolymer P in dispers verteilter Form, das

a) 80 bis 99,89 Gew.-% mindestens eines Monomers, ausgewählt unter Estern der Acrylsäure mit $C_1$-$C_{12}$-Alkanolen, Estern der Methacrylsäure mit $C_1$-$C_8$-Alkanolen und Monovinylaromaten,

b) 0,1 bis 19,99 Gew.-% mindestens eines davon verschiedenen Monomers, ausgewählt unter $\alpha,\beta$-ethylenisch ungesättigten $C_3$-$C_6$-Mono- und Dicarbonsäuren, den Amiden, N-Alkylamiden und Nitrilen dieser Carbonsäuren, Halbestern $\alpha,\beta$-monoethylenisch ungesättigter $C_4$-$C_8$-Dicarbonsäuren mit $C_1$-$C_{12}$-Alkanolen, Vinylestern aliphatischer $C_1$-$C_{18}$-Carbonsäuren, $\alpha,\beta$-monoethylenisch ungesättigten Sulfonsäuren und Sulfonsäureestern und $\alpha,\beta$-monoethylenisch ungesättigten Siloxanen, und

c) 0,01 bis 1,9 Gew.-% mindestens eines vernetzend wirkenden Monomers, ausgewählt unter Estern der Acrylsäure oder Methacrylsäure mit linearen oder verzweigten $C_3$-$C_6$-Alkenolen, cyclischen $C_5$-$C_7$-Alkenolen und polycyclischen $C_7$- bis $C_{12}$-Alkenolen

einpolymerisiert enthält, wobei der Gesamtgehalt an freie Säuregruppen tragenden Monomeren, bezogen auf die Gesamtmenge aller einpolymerisierten Monomeren, kleiner als 5 Gew.-% ist.

## Claims

**1.** The use of aqueous film-forming formulations comprising in dispersed form at least one copolymer P composed of ethylenically unsaturated monomers said copolymer P comprising in copolymerized form

a) from 80 to 99.89% by weight of at least one monomer selected from esters of acrylic acid with $C_1$-$C_{12}$-alkanols, esters of methacrylic acid with $C_1$-$C_8$-alkanols and monovinylaromatics,

b) from 0.1 to 19.99% by weight of at least one monomer different from a), selected from $\alpha,\beta$-ethylenically unsaturated $C_3$-$C_6$ monocarboxylic and dicarboxylic acids, the amides, N-alkylamides and nitriles of these carboxylic acids, monoesters of $\alpha,\beta$-monoethylenically unsaturated $C_4$-$C_8$ dicarboxylic acids with $C_1$-$C_{12}$-alkanols, vinyl esters of aliphatic $C_1$-$C_{18}$ carboxylic acids, $\alpha,\beta$-monoethylenically unsaturated sulfonic acids and sulfonic esters, and $\alpha,\beta$-monoethylenically unsaturated siloxanes, and

c) from 0.01 to 1.9% by weight of at least one crosslinking monomer selected from esters of acrylic or methacrylic acid with linear or branched $C_3$-$C_6$-alkenols, cyclic $C_5$-$C_7$-alkenols and polycylic $C_7$- to $C_{12}$-alkenols,
the total content of monomers bearing free acid groups, based on the total amount of all copolymerized monomers, being less than 5% by weight, for coating shaped mineral articles.

**2.** The use as claimed in claim 1, wherein the copolymer P comprises in copolymerized form as monomer a) at least one ester of acrylic acid with linear and branched $C_4$-$C_8$-alkanols and at least one further monomer selected from the esters of methacrylic acid with $C_1$- and linear $C_2$-$C_4$-alkanols and vinylaromatic compounds.

**3.** The use as claimed in either of claims 1 and 2, wherein the crosslinking monomer c) is selected from allyl acrylate, methallyl acrylate, allyl methacrylate and methallyl methacrylate and mixtures thereof.

**4.** The use as claimed in any of the preceding claims, wherein the monomer b) is selected from acrylic acid, methacrylic acid, maleic acid, acrylamide, methacrylamide, acrylonitrile and methacrylonitrile and mixtures thereof.

**5.** The use as claimed in any of the preceding claims, wherein the film-forming aqueous formulation comprises, based on its overall weight

i. from 10 to 60% by weight of at least one copolymer P, and
ii. from 0.1 to 20% by weight of customary auxiliaries.

**6.** The use as claimed in any of the preceding claims, wherein the film-forming aqueous formulation comprises, based on its overall weight

i. from 10 to 60% by weight of at least one polymer P,
ii. from 0.1 to 20% by weight of customary auxiliaries, iii.from 10 to 60% by weight of at least one finely divided filler and/or one inorganic pigment.

**7.** A method of coating a shaped mineral article, which comprises applying at least one aqueous film-forming formulation as defined in any of claims 1 to 6 to the shaped mineral article.

**8.** A method as claimed in claim 7, wherein an untreated mineral article is provided with at least one first coating by applying to said shaped mineral article at least one first aqueous film-forming formulation which comprises in dispersed form at least one copolymer P or a copolymer P' composed of ethylenically unsaturated monomers, having a glass transition temperature in the range from -20 to +80 °C, and then drying the coated article, repeating this procedure if desired and subsequently applying at least one further aqueous film-forming formulation as defined in any of claims 1 to 6 as topcoat to the shaped mineral article provided with at least one first coat.

**9.** A method as claimed in claim 8, wherein the first film-forming aqueous formulation comprises, based on its overall weight

i. from 10 to 60% by weight of at least one polymer P',
ii. from 0.1 to 20% by weight of customary auxiliaries, and iii.from 10 to 60% by weight of at least one finely-divided filler and/or one inorganic pigment

and the second film-forming aqueous formulation comprises, based on its overall weight

i. from 10 to 60% by weight of
ii. from 0.1 to 20% by weight of customary auxiliaries and iii.has an overall pigment/filler content which is lower by at least 10% by weight than that of the first formulation.

**10.** A shaped mineral article obtainable as claimed in any of claims 7 to 9.

**11.** An aqueous film-forming formulation comprising in dispersed form at least one copolymer P composed of ethylenically unsaturated monomers said copolymer P comprising in copolymerized form

a) from 80 to 99.89% by weight of at least one monomer selected from esters of acrylic acid with $C_1$-$C_{12}$-alkanols, esters of methacrylic acid with $C_1$-$C_8$-alkanols and monovinylaromatics,

b) from 0.1 to 19.99% by weight of at least one monomer different from a), selected from α,β-ethylenically unsaturated $C_3$-$C_6$ monocarboxylic and dicarboxylic acids, the amides, N-alkylamides and nitriles of these carboxylic acids, monoesters of α,β-monoethylenically unsaturated $C_4$-$C_8$ dicarboxylic acids with $C_1$-$C_{12}$-alkanols, vinyl esters of aliphatic $C_1$-$C_{18}$ carboxylic acids, α,β-monoethylenically unsaturated sulfonic acids and sulfonic esters, and α,β-monoethylenically unsaturated siloxanes, and

c) from 0.01 to 1.9% by weight of at least one crosslinking monomer selected from esters of acrylic or methacrylic acid with linear or branched $C_3$-$C_6$-alkenols, cyclic $C_5$-$C_7$-alkenols and polycylic $C_7$- to $C_{12}$-alkenols, the total content of monomers bearing free acid groups, based on the total amount of all copolymerized monomers, being less than 5% by weight.

## Revendications

1. Mise en oeuvre des préparations aqueuses formants une pellicule qui comprennent, sous forme de dispersion, au moins un copolymère P constitué de monomères à insaturation éthylénique qui contient, sous forme polymérisée,

   a) au moins un monomère, à raison de 80% à 99,89% en poids, choisi dans le groupe formé par les esters dérivés de l'acide acrylique et des alcanols en $C_1$ à $C_{12}$, les esters dérivés de l'acide méthacrylique et des alcanols en $C_1$ à $C_8$ et les composés aromatiques monovinyliques,
   b) au moins un monomère, à raison de 0,1% à 19,99% en poids, qui est différent du premier et qui est choisi dans le groupe formé par les acides dicarboxyliques et monocarboxyliques en $C_3$ à $C_6$ à insaturation éthylénique en position $\alpha,\beta$, les amides, les N-alkylamides et les nitriles de ces acides carboxyliques, les hémi-esters dérivés des acides dicarboxyliques en $C_4$ à $C_8$ à insaturation éthylénique en position $\alpha,\beta$ et des alcanols en $C_1$ à $C_{12}$, les esters vinyliques dérivés des acides carboxyliques en $C_1$ à $C_{18}$ aliphatiques, les esters d'acide sulfonique et les acides sulfoniques à insaturation monoéthylénique en position $\alpha,\beta$ et les siloxanes à insaturation monoéthylénique en position $\alpha,\beta$ et
   c) au moins un monomère à pouvoir réticulant, à raison de 0,01% à 1,9% en poids, choisi dans le groupe formé par les esters dérivés de l'acide acrylique ou de l'acide méthacrylique et des alcénols en $C_3$ à $C_6$ linéaires ou ramifiés, des alcénols en $C_5$ à $C_7$ cycliques ou des alcénols en $C_7$ à $C_{12}$ polycycliques, la teneur totale en monomères présentant des groupes acide libre étant inférieure à 5% en poids, par rapport à la quantité totale de tous les monomères faisant partie du polymère,
   pour le revêtement de corps moulés minéraux.

2. Mise en oeuvre selon la revendication 1, **caractérisée en ce que** le copolymère contient, sous forme polymérisée, en tant que monomère a), au moins un ester dérivé de l'acide acrylique et de l'alcanol en $C_4$ à $C_8$ linéaire ou ramifié et au moins un monomère supplémentaire choisi dans le groupe formé par les esters dérivés de l'acide méthacrylique et de l'alcanol en $C_1$ ou les alcanols en $C_2$ à $C_4$ linéaires et les composés vinylaromatiques.

3. Mise en oeuvre selon la revendication 1 ou 2, **caractérisée en ce que** le monomère c) à pouvoir réticulant est choisi dans le groupe formé par l'ester allylique de l'acide acrylique, l'ester méthallylique de l'acide acrylique, l'ester allylique de l'acide méthacrylique et l'ester méthallylique de l'acide méthacrylique et leurs mélanges.

4. Mise en oeuvre selon l'une des revendications précédentes, **caractérisée en ce que** le monomère b) est choisi dans le groupe formé par l'acide acrylique, l'acide méthacrylique, l'acide maléique, l'acrylamide, le méthacrylamide, l'acrylonitrile et le méthacrylonitrile et leurs mélanges.

5. Mise en oeuvre selon l'une des revendications précédentes, **caractérisée en ce que** la préparation aqueuse formant une pellicule contient, par rapport à son poids total,

   i. au moins un copolymère P à raison de 10% à 60% en poids et
   ii. les adjuvants d'usage à raison de 0,1% à 20% en poids.

6. Mise en oeuvre selon l'une des revendications précédentes, **caractérisée en ce que** la préparation aqueuse formant une pellicule contient, par rapport à son poids total,

   i. au moins un copolymère P à raison de 10% à 60% en poids,
   ii. les adjuvants d'usage à raison de 0,1% à 20% en poids,
   iii. au moins une charge finement divisée et/ou un pigment inorganique, à raison de 10% à 60% en poids.

7. Procédé pour le revêtement de corps moulés minéraux, **caractérisé en ce que** l'on applique, sur le corps moulé minéral, au moins une préparation aqueuse formant une pellicule qui est définie dans l'une quelconque des revendications 1 à 6.

8. Procédé selon la revendication 7, **caractérisé en ce que** l'on applique à un corps moulé minéral et non traité, au moins un premier revêtement en procédant, sur le corps minéral, à l'application d'au moins une première préparation aqueuse formant une pellicule et contenant, sous forme de dispersion, au moins un copolymère P ou un copolymère P' qui est constitué de monomères à insaturation éthylénique et qui présente une température de transition vitreuse dans la plage de -20°C à +80°C, on procède ensuite à un séchage, on répète ce processus

éventuellement et on applique par la suite, en tant que couche de recouvrement, au moins une préparation aqueuse supplémentaire formant une pellicule, préparation qui est définie dans l'une quelconque des revendications 1 à 6, sur le corps moulé minéral doté d'au moins une première couche.

**9.** Procédé selon la revendication 8, **caractérisée en ce que** la première préparation aqueuse formant une pellicule contient, par rapport à son poids total,

i. au moins un copolymère P' à raison de 10% à 60% en poids,
ii. les adjuvants d'usage à raison de 0,1% à 20% en poids,
iii. au moins une charge finement divisée et/ou un pigment inorganique, à raison de 10% à 60% en poids.

et **en ce que** la deuxième préparation aqueuse formant une pellicule contient, par rapport à son poids total,

i. au moins un copolymère P à raison de 10% à 60% en poids,
ii. les adjuvants d'usage à raison de 0,1% à 20% en poids, et
iii. présente une teneur totale en pigment/charge qui est, par rapport à la première préparation, inférieure d'au moins 10% en poids.

**10.** Corps moulé minéral que l'on peut obtenir selon l'une quelconque des revendications 7 à 9.

**11.** Préparation aqueuse formant une pellicule et comprenant au moins un copolymère P constitué de monomères à insaturation éthylénique sous forme de dispersion qui contient, sous forme polymérisée,

a) au moins un monomère, à raison de 80% à 99,89% en poids, choisi dans le groupe formé par les esters dérivés de l'acide acrylique et des alcanols en $C_1$ à $C_{12}$, les esters dérivés de l'acide méthacrylique et des alcanols en $C_1$ à $C_8$ et les composés aromatiques monovinyliques,
b) au moins un monomère qui est différent du premier, à raison de 0,1% à 19,99% en poids, choisi dans le groupe formé par les acides dicarboxyliques et monocarboxyliques en $C_3$ à $C_6$ à insaturation éthylénique en position $\alpha,\beta$, les amides, N-alkylamides et nitriles de ces acides carboxyliques, les hémi-esters dérivés des acides dicarboxyliques en $C_4$ à $C_8$ à insaturation éthylénique en position $\alpha,\beta$ et des alcanols en $C_1$ à $C_{12}$, les esters vinyliques dérivés des acides carboxyliques en $C_1$ à $C_{18}$ aliphatiques, les esters d'acide sulfonique et les acides sulfoniques à insaturation monoéthylénique en position $\alpha,\beta$ et les siloxanes à insaturation monoéthylénique en position $\alpha,\beta$, et
c) au moins un monomère à pouvoir réticulant, à raison de 0,01% à 1,9% en poids, choisi dans le groupe formé par les esters dérivés de l'acide acrylique ou de l'acide méthacrylique et des alcénols en $C_3$ à $C_6$ linéaires ou ramifiés, des alcénols en $C_5$ à $C_7$ cycliques ou des alcénols en $C_7$ à $C_{12}$ polycycliques,

la teneur totale en monomères présentant des groupes acide libres étant inférieure à 5% en poids, par rapport à la quantité totale de tous les monomères faisant partie du polymère.